# EUROPEAN PATENT SPECIFICATION

(11) **EP 2 587 045 B1**
(45) Date of publication and mention of the grant of the patent: **10.10.2018**
(21) Application number: 11797989.8
(22) Date of filing: 08.06.2011
(51) Int. Cl.: F02M 37/22, B01D 35/02, F02M 37/00, F02M 37/10, B01D 35/027, B01D 35/00

(54) **FUEL FILTRATION DEVICE**
KRAFTSTOFFFILTERUNGSVORRICHTUNG
DISPOSITIF DE FILTRATION DE CARBURANT

(30) Priority: 28.01.2011 JP 2011016338; 25.06.2010 JP 2010144474
(43) Date of publication of application: 01.05.2013
(73) Proprietor: Honda Motor Co., Ltd., Minato-ku Tokyo 107-8556 (JP)
(72) Inventor: ITO Atsushi, Wako-shi Saitama 351-0193 (JP); ISHII Tsubasa, Wako-shi Saitama 351-0193 (JP); ANDO Hideaki, Wako-shi Saitama 351-0193 (JP); UMEBAYASHI Fujio, Wako-shi Saitama 351-0193 (JP); TODA Junichi, Wako-shi Saitama 351-0193 (JP); KINOSHITA Keita, Wako-shi Saitama 351-0193 (JP); OTO Hiroaki, Wako-shi Saitama 351-0193 (JP)
(74) Representative: Kiwit, Benedikt
(86) International application number: PCT/JP2011/063144
(87) International publication number: WO 2011/162103

(56) References cited:
- EP-A1- 1 502 637
- EP-A1- 2 138 220
- WO-A1-2008/133328
- JP-A- 10 339 242
- JP-A- 2004 190 489
- JP-A- 2008 240 687
- JP-U- 61 171 510
- US-A- 5 716 522
- US-A- 5 902 480
- US-A1- 2003 132 156
- US-B2- 6 613 227

## Description

### TECHNICAL FIELD

The present invention relates to a fuel filter device in which a filter assembly having filter layers of first multiple layers is provided in a fuel flow path extending from the interior of a fuel tank to fuel consumption means via a fuel pump, and a finest filter layer is disposed downstream-most in filter layers of second multiple layers forming at least part of the first multiple layers.

### BACKGROUND ART

A fuel filter device in which a filter assembly having filter layers of multiple layers that become finer in going toward the downstream side is housed within a fuel tank so as to be connected to a suction side of a fuel pump that sucks up fuel from the fuel tank is known from, for example, Patent Document 1.

### RELATED ART DOCUMENTS

### PATENT DOCUMENTS

Patent Document 1: Japanese Patent Application Laid-open No. 2000-246026.

US6613227B2 discloses a fuel filter device for fuel with filter layers, wherein the layer pore size between the upstream most layer and the downstream most layer is decreasing.

### SUMMARY OF THE INVENTION

### PROBLEMS TO BE SOLVED BY THE INVENTION

However, dust in gasoline or alcohol fuel is dispersed; dust in fuel containing alcohol in particular tends to be easily dispersed, and dust in fuel used in a region where fine particle size dust is abundant also has strong tendency to be dispersed. If such fuel in which dust is easily dispersed is filtered by means of the filter layers of the multiple layers in the filter assembly of the fuel filter device disclosed in Patent Document 1 above, dust aggregates each time fuel passes through the filter layers on the upstream side, enlarged dust is concentratedly trapped in the downstream fine filter layer, and the downstream fine filter layer is thereby easily clogged, thus causing degradation of the durability of the fuel filter device.

The present invention has been accomplished in light of such circumstances, and it is an object thereof to provide a fuel filter device in which improved durability is achieved.

### MEANS FOR SOLVING THE PROBLEMS

The above object is attained with a fuel filter device according to independent claim 1.

According to a second aspect, the coarseness of the aggregation-promoting body is set at 2 to 50 times the coarseness of the coarsest filter layer among the filter layers of the second multiple layers.

According to the present invention, the aggregation-promoting part is arranged so that the flow direction or flow velocity of fuel is changed three or more times.

According to a third aspect of the present invention, the sponge member is retained by at least one filter layer among the first multiple layers of the filter layers of the fist multiple layers.

According to a fourth aspect, the filter assembly is formed from the layered filter layers of the second multiple layers, and a spunbonded sheet that is a filter layer layered on the downstream-most layer of the second multiple layers in order to retain the shape of the filter layers of the second multiple layers.

According to a fifth aspect, the aggregation-promoting part further comprises another spunbonded sheet sandwiching the filter layer of the second multiple layers between itself and the above spunbonded sheet.

According to a sixth aspect, the filter assembly is supported on a suction part of the fuel pump, part of the fuel pump being housed within the fuel tank.

A fuel injection valve 18 of embodiments corresponds to the fuel consumption means of the present invention, and sponges 25A, 25B, and 25C of the embodiments correspond to the sponge member of the present invention.

### EFFECTS OF THE INVENTION

In accordance with the first aspect of the present invention, since dust in the fuel is aggregated by the aggregation-promoting part before the upstream side of at least the second finest filter layer among the second multiple layers forming at least part of the first multiple layers, trapping of dust is dispersed throughout the filter layers so that dust is not concentratedly trapped in the downstream-most finest filter layer among the filter layers of the second multiple layers, thus enhancing the durability.

Furthermore, in accordance with the second aspect of the present invention, since the aggregation-promoting body has a coarseness that is coarser than that of the coarsest filter layer, it is possible to suppress any increase in flow resistance due to the aggregation-promoting part; since the coarseness of the aggregation-promoting body is set at 2 to 50 times the coarseness of the coarsest filter layer, dust can be reliably trapped by the filter layer.

In accordance with the present invention, the flow direction or flow velocity of fuel is changed 3 times or more by the aggregation-promoting part to increase the staying time of dust in a flow field for promoting aggregation, thus carrying out effective promotion of aggregation.

In accordance with the third aspect of the present invention, it is possible to eliminate the need for a member exclusively used for retaining the sponge member forming the aggregation-promoting part by retaining the sponge member by means of the filter layer, thereby reducing the number of components.

In accordance with the fourth aspect of the present invention, since the filter layer that is the downstream-most of the filter layers of the first multiple layers forming the filter assembly is the spunbonded sheet, the shape of the filter assembly on the downstream-most side can be retained by the spunbonded sheet, which also functions as a filter layer.

In accordance with the fifth aspect of the present invention, since part of the aggregation-promoting part is formed from another spunbonded sheet sandwiching the filter layers of the second multiple layers between itself and the spunbonded sheet on the filter assembly side, it is possible to promote aggregation while retaining the shape of the filter layers of the second multiple layers, and it is possible to reduce the cost by using the spunbonded sheet in common for the filter assembly and the aggregation-promoting part.

Furthermore, in accordance with the sixth aspect of the present invention, since the filter assembly is supported on the suction part of the fuel pump within the fuel tank, by disposing the aggregation-promoting part in a portion where flow is fast due to suction by the fuel pump it is possible to enhance the promotion of aggregation of dust, thereby reducing the dimensions of the aggregation-promoting part.

### BRIEF DESCRIPTION OF DRAWINGS

[FIG. 1] A vertical sectional view, showing a first embodiment, of an essential part of a fuel tank. (first embodiment)
[FIG. 2] An exploded perspective view of a filter assembly and a sponge member. (first embodiment)
[FIG. 3] A diagram showing change in amount of dust trapped by each filter layer due to the presence or absence of an aggregation-promoting part. (first embodiment)
[FIG. 4] A diagram showing change in pressure loss due to the presence or absence of the aggregation-promoting part. (first embodiment)
[FIG. 5] A sectional view of a filter assembly and an aggregation-promoting part, which is not part of the present invention.
[FIG. 6] A sectional view of a filter assembly and an aggregation-promoting part, which is not part of the present invention.
[FIG. 7] A view, related to a second embodiment, showing a fuel flow path extending from a fuel pump to a fuel injection valve. (second embodiment)
[FIG. 8] A sectional view of a filter assembly and an aggregation-promoting part of the second embodiment. (second embodiment)
[FIG. 9] A sectional view of a filter assembly and an aggregation-promoting part of a third embodiment. (third embodiment)
[FIG. 10] A sectional view of a filter assembly and an aggregation-promoting part of a fourth embodiment. (fourth embodiment)
[FIG. 11] A sectional view of a filter assembly and an aggregation-promoting part of a fifth embodiment. (fifth embodiment)
[FIG. 12] A sectional view of a filter assembly and an aggregation-promoting part, which is not part of the present invention.
[FIG. 13] A graph for explaining forces acting between colloid particles of an embodiment which is not part of the invention.

### EXPLANATION OF REFERENCE NUMERALS AND SYMBOLS

11 Fuel tank
12 Fuel pump
13 Suction part
18 Fuel injection valve, which is fuel consumption means
20A, 20B, 20C, 20D, 20E Filter assembly
21A, 21B, 21C, 21D, 21E, 22A, 22B, 22C, 22D, 22E, 23A, 23B, 23C, 23E Filter layer
24A, 24B, 24C, 24D, 24E, 24G, 24H Aggregation-promoting part
25A, 25B, 25C Sponge, which is a sponge member
25E, 25F, 25G Aggregation-promoting body
52 Spunbonded sheet functioning as filter layer
55 Spunbonded sheet functioning as aggregation-promoting body
31, 41, 42 Chamber
34, 45 Tubular member

### MODES FOR CARRYING OUT THE INVENTION

Modes for carrying out the present invention are explained below by reference to the attached drawings.

### EMBODIMENT 1

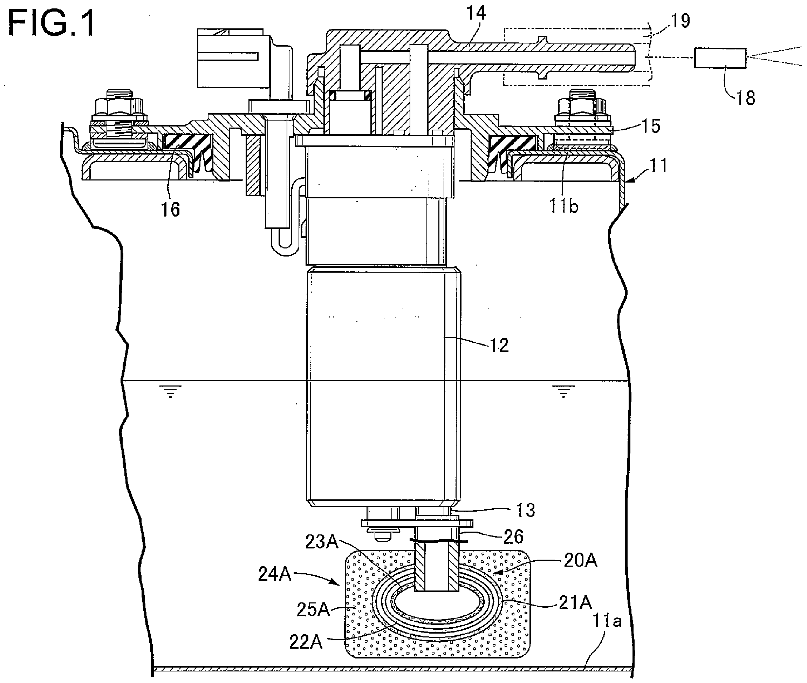

A first embodiment of the present invention is now explained by reference to FIG. 1 to FIG. 4; first, in FIG. 1, fuel formed from gasoline and alcohol is stored in a fuel tank 11 mounted on a vehicle such as a motorcycle, a fuel pump 12 is mounted on a ceiling plate 11b of the fuel tank 11 via a mounting plate 15, a tubular suction part 13 of the fuel pump 12 being disposed in the vicinity of a bottom plate 11a of the fuel tank 11 in order to suck up the above fuel, and an elastic member 16 is disposed between the mounting plate 15 and the ceiling plate 11b.

A tubular discharge part 14 is provided in an upper part of the fuel pump 12, and this discharge part 14 is connected to fuel injection means such as a fuel injection valve 18 via a pipeline 19.

Provided in a fuel flow path extending from the interior of the fuel tank 11 to the fuel injection valve 18 via the fuel pump 12 is a filter assembly 20A that includes first multiple layers, for example, three layers, that is, first, second, and third filter layers 21A, 22A, and 23A; in this first embodiment, the filter assembly 20A is connected to the suction part 13 of the fuel pump 12 within the fuel tank 11 so as to be retained by the suction part 13. That is, a connection tube 26 of the filter assembly 20A is fitted and connected to the suction part 13.

The first to third filter layers 21A to 23A of the filter assembly 20A are disposed so that the third filter layer 23A is covered by the second filter layer 22A and the second filter layer 22A is covered by the first filter layer 21A. With regard to filter layers of second multiple layers forming at least part of the first multiple layers, the finest filter layer is disposed downstream-most. This first embodiment is set so that the second multiple layers are equal to the first multiple layers, the second filter layer 22A is finer than the first filter layer 21A, and the third filter layer 23A is finer than the second filter layer 22A. That is, the first to third filter layers 21A to 23A are made finer in going toward the downstream side, and the third filter layer 23A, which is the finest, is disposed downstream-most.

Provided in the filter assembly 20A is an aggregation-promoting part 24A that promotes aggregation of dust in fuel by changing the flow direction or flow velocity of fuel so that aggregation of dust in fuel is promoted before the upstream side of at least the second finest filter layer among the first to third filter layers 21A to 23A, that is, the second filter layer 22A; with regard to the aggregation-promoting part 24A in the first embodiment, a sponge 25A as a sponge member that is an aggregation-promoting body is retained by at least one filter layer among the first to third filter layers 21A to 23A of the first multiple layers, in this first embodiment by the first filter layer 21A, which is the outermost layer, and fitted so as to cover the first filter layer 21A.

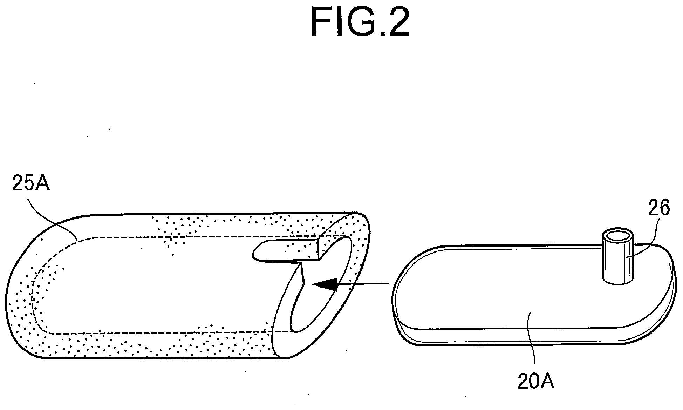

Moreover, it is desirable for the sponge 25A to be formed in a bag shape so that the filter assembly 20A can be inserted as shown in FIG. 2.

The aggregation-promoting part 24A is not for the purpose of trapping dust in fuel but for the purpose of making dust in fuel aggregate by changing the flow direction or flow velocity of fuel so as to enhance the efficiency of trapping by the filter layers 21A to 23A; the coarseness of the sponge 25A is larger than dust in the fuel and, moreover, the thickness of the sponge 25A allows the flow direction or flow velocity of fuel to be changed 3 or more times, and specifically 3 to 15 times.

Analysis of fuel that is distributed in the market shows that among dust contained in fuel about 95% is dust of 10 µm or smaller; if the coarseness of the sponge 25A is set at 30 µm or greater, a structure for which trapping of dust is not the main purpose is obtained, and the coarseness of the sponge 25A is set at for example 30 to 1000 µm. Furthermore, it is desirable for the thickness of the sponge 25A to be 0.5 mm or greater in order to change the flow direction or flow velocity of fuel 3 or more times.

Here, the structure for which trapping of dust is not the main purpose means that the proportion of dust trapped by the sponge 25A is smaller than the proportion of dust trapped by the first to third filter layers 21A to 23A.

On the other hand, among the first to third filter layers 21A to 23A, the first filter layer 21A, which is the coarsest, upstream-most layer, is set to have a coarseness of 2 to 20 µm, and the coarseness of the sponge 25A is set, for example, 2 to 50 times coarser than the coarseness of the first filter layer 21A, which is the coarsest, upstream-most layer among the first to third filter layers 21A to 23A.

This first embodiment is now explained; since the aggregation-promoting part 24A, which promotes aggregation of dust in fuel by changing the flow direction or flow velocity of fuel, is provided in the filter assembly 20A so that aggregation of dust in fuel is promoted before the upstream side of the second filter layer 22A, which is at least the second finest filter layer among the first to third filter layers 21A to 23A, aggregation of dust in fuel is promoted before at least the second finest filter layer, that is, the second filter layer 22A among the first to third filter layers 21A to 23A, and it is possible to prevent dust from being concentratedly trapped in the downstream-most filter layer among the first to third filter layers 21A to 23A, that is, the third filter layer 23A, thereby enabling trapping of dust to be dispersed throughout the filter layers 21A to 23A and the durability to be enhanced.

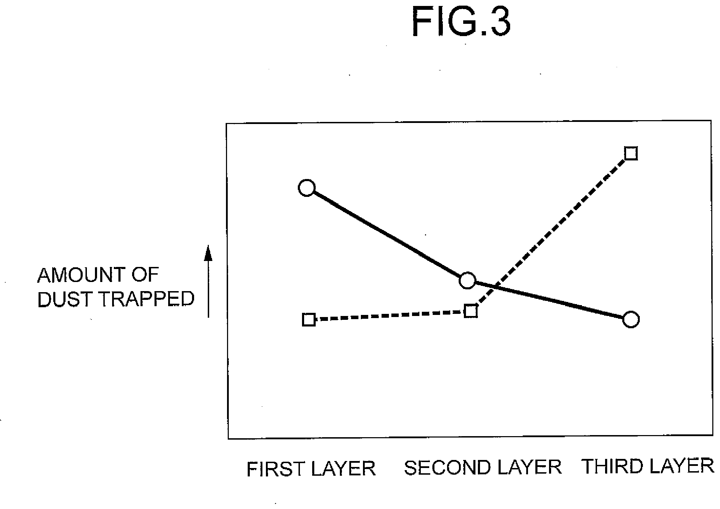

The amount of dust trapped by each layer when fuel formed from gasoline and alcohol is filtered using only the first to third filter layers 21A to 23A with the coarseness of the first filter layer 21A as about 40 µm is shown by the broken line in FIG. 3; the amount trapped does not change for the first and second filter layers 21A and 22A, but the amount of dust trapped increases for the third filter layer 23A. On the other hand, it has been found that when filtration of fuel formed from gasoline and alcohol is carried out by setting the coarseness of the sponge 25A at 40 µm, which is twice the coarseness of 20 µm of the coarsest first filter layer 21A, setting the thickness of the sponge 25A at 2 mm so as to give a flow field of 50 times, and covering the first filter layer 21A, which is the outermost layer among the first to third filter layers 21A to 23A, by the sponge 25A, as shown by the solid line in FIG. 3 the amount of dust trapped by the third filter layer 23A is similar to or less than the amount trapped by the first and second filter layers 21A and 22A. That is, it is possible to disperse trapping of dust throughout the filter layers 21A to 23A by preventing dust from being trapped concentratedly in the third filter layer 23A, which among the first to third filter layers 21A to 23A is the finest, downstream-most filter layer.

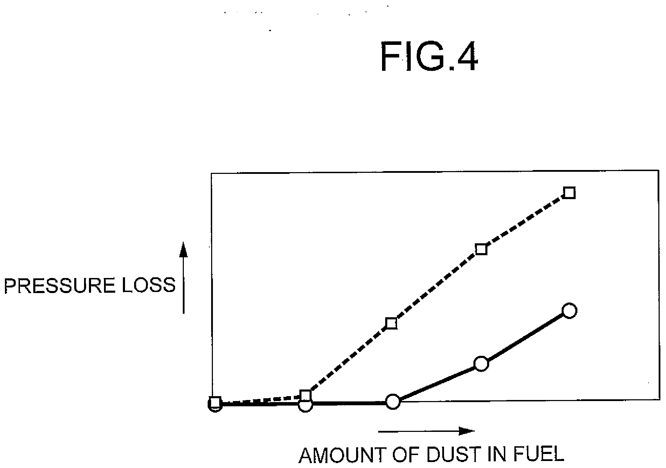

Furthermore, it has been found that, in accordance with trapping of dust being dispersed throughout the first to third filter layers 21A to 23A as described above, the pressure loss in the first to third filter layers 21A to 23A in a state in which the first filter layer 21A is covered by the sponge 25A changes according to the amount of dust in fuel as shown by the solid line in FIG. 4, whereas the pressure loss in the first to third filter layers 21A to 23A in a state in which it is not covered by the sponge 25A changes as shown by the broken line in FIG. 4, and it is possible to suppress pressure loss by promoting the aggregation of dust by the sponge 25A, thereby increasing the life span of the filter assembly 20A.

Furthermore, since the coarseness of the sponge 25A, which is the aggregation-promoting body forming the aggregation-promoting part 24A, is set at 2 to 50 times the coarseness of the upstream-most filter layer among the multiple filter layers, it is possible to suppress any increase in flow resistance by the aggregation-promoting part 24A and to reliably trap dust in the filter layers 21A to 23A.

Moreover, since the sponge 25A forming the aggregation-promoting part 24A changes the flow direction or flow velocity of fuel 3 times or more, preferably 3 to 15 times, it is possible to increase the staying time of dust in the flow field for promoting aggregation, thus carrying out effective promotion of aggregation.

Furthermore, since the sponge 25A is retained by at least one filter layer among the first to third filter layers 21A to 23A, in this embodiment the first filter layer 21A, which is the outermost layer, it is possible to eliminate the need for a member exclusively used for retaining the sponge 25A, thus reducing the number of components.

Moreover, since the sponge 25A is formed in a bag shape so that the filter assembly 20A can be inserted, when a filter assembly 20A for dealing with fuel formed from gasoline containing no alcohol is converted for alcohol-containing gasoline fuel, it can be dealt with by simply attaching the sponge 25A.

Furthermore, due to fuel being formed from gasoline and alcohol, dust is easily dispersed, and although it is difficult to trap dust by the upstream side filter layer if only the first to third filter layers 21A to 23A are used, promoting aggregation of dust by the aggregation-promoting part 24A enables dust to be trapped easily by the downstream side filter layer of the aggregation-promoting part 24A.

Moreover, since the filter assembly 20A is supported on the suction part 13 of the fuel pump 12 having part thereof housed within the fuel tank 11, disposing the aggregation-promoting part 24A in a portion where flow is fast due to suction by the fuel pump 12 enables promotion of aggregation of dust to be improved and the dimensions of the aggregation-promoting part 24A to be reduced.

The sponge member is not limited to the above-mentioned sponge 25A and may be one formed from, for example, a nonwoven fabric or a multilayer mesh. Other embodiment not being part of the invention

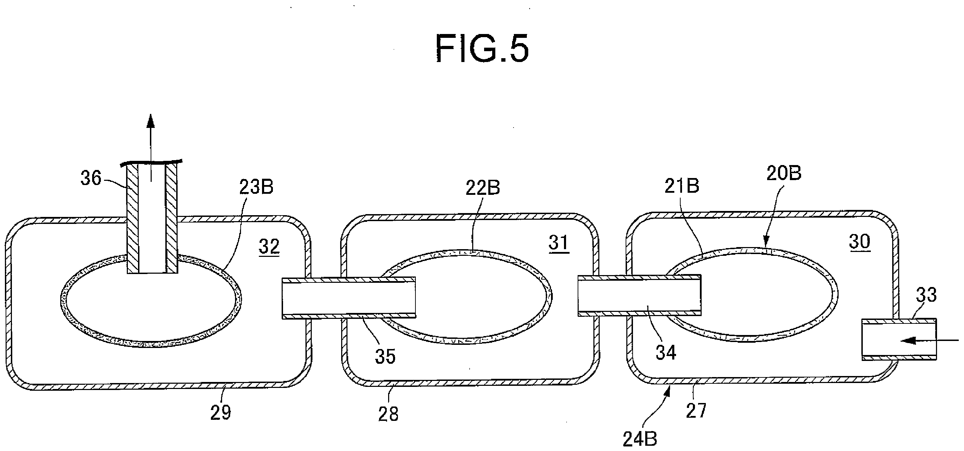

This embodiment is now explained by reference to FIG. 5; with regard to a filter assembly 20B, first to third filter layers 21B, 22B, and 23B, which are first multiple layers formed in a three-dimensional shape with an elliptical vertical cross-section, are disposed independently from each other and connected so that fuel passes in sequence through the first, second, and third filter layers 21B, 22B, and 23B, and the mesh of second multiple layers, which are at least part of the first multiple layers, in this embodiment, the first to third filter layers 21B to 23B, is set so that it becomes finer in going toward the downstream side.

Provided in this filter assembly 20B is an aggregation-promoting part 24B that promotes aggregation of dust in fuel by changing the flow direction or flow velocity of fuel, so that aggregation of dust in fuel is promoted before the upstream side of at least the second finest filter layer among the first to third filter layers 21B, 22B, and 23B, that is, the second filter layer 22B; the aggregation-promoting part 24B is formed in a labyrinth structure in which first and second chambers 30 and 31, which are a plurality of divided chambers, are made to communicate with each other by a first tubular member 34.

The first chamber 30 is formed within a first case 27, the first filter layer 21B is housed in the first chamber 30, the second chamber 31 communicating with the first chamber 30 via the first tubular member 34 is formed within a second case 28, the second filter layer 22B is housed in the second chamber 31, a third chamber 32 communicating with the second chamber 31 via a second tubular member 35 is formed within a third case 29, and a third filter layer 23B is housed in the third chamber 32.

One end of the first tubular member 34, whose cross-sectional area is smaller than the cross-sectional area of the first case 27, extends liquid-tightly through the first case 27 and projects into the first filter layer 21B, and the other end of the first tubular member 34 is connected to the second case 28 so as to communicate with the second chamber 31. Furthermore, one end of the second tubular member 35 extends through the second case 28 and projects into the second filter layer 22B, and the other end of the second tubular member 35 is connected to the third case 29 so as to communicate with the third chamber 32.

Moreover, an inlet tube 33 for introducing fuel within a fuel tank 11 (ref. the first embodiment) into the first chamber 30 is provided in the first case 27 so that the outlet is disposed at a position offset from the inlet of the first tubular member 34 on a plane perpendicular to the axis of the first tubular member 34, an outlet tube 36 extending liquid-tightly through the third case 29 with one end thereof projecting into the third filter layer 23B is provided in the third case 29, and the outlet tube 36 is connected to a suction part 13 (ref. the first embodiment) of a fuel pump 12.

That is, the aggregation-promoting part 24B is formed from the inlet tube 33, the first chamber 30, the first tubular member 34, and the second chamber 31. The flow velocity of fuel is decreased by fuel flowing from the inlet tube 33 into the first chamber 30, and due to the outlet of the inlet tube 33 and the inlet of the first tubular member 34 being offset from each other, the flow direction is changed by the flow of fuel hitting a wall, etc. Furthermore, the flow velocity is increased by fuel flowing from the first chamber 30 into the first tubular member 34, the flow velocity is decreased by fuel flowing from the first tubular member 34 into the second chamber 31, and such changes in the fuel flow direction and flow velocity function as the aggregation-promoting part 24B.

In accordance with this embodiment, since aggregation of dust in fuel is promoted by the aggregation-promoting part 24B before the upstream side of at least the second finest filter layer among the first to third filter layers 21B to 23B, that is, the second filter layer 22B, trapping of dust is dispersed throughout the filter layers 21B to 23B while preventing dust from being trapped concentratedly by the finest filter layer among the first to third filter layers 21B to 23B, that is, the third filter layer 23B, thus enhancing the durability.

Moreover, since the aggregation-promoting part 24B is formed in a labyrinth structure in which the divided first and second chambers 30 and 31 are made to communicate with each other via the first tubular member 34, clogging of the aggregation-promoting part 24B can be disregarded, and a stable flow field can be provided. Other embodiment not being part of the invention

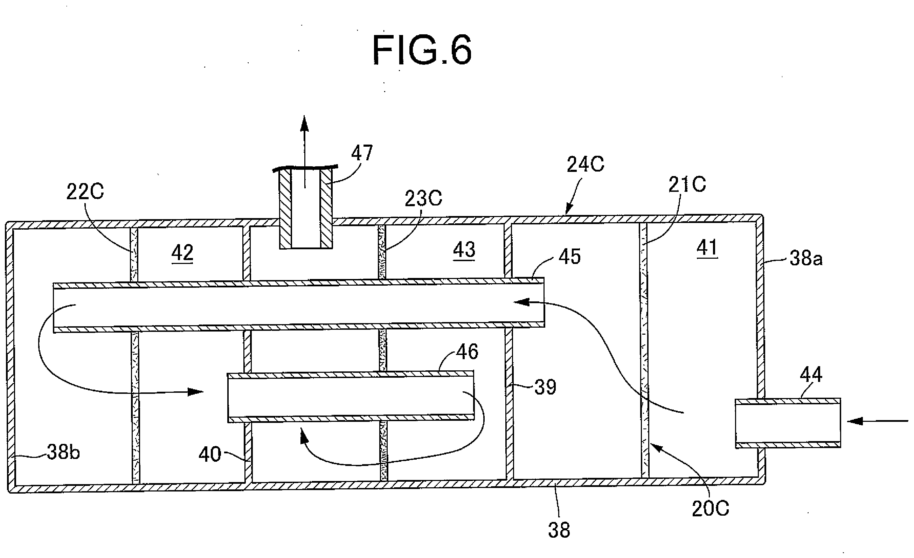

This embodiment is now explained by reference to FIG. 6; a filter assembly 20C is formed by disposing first to third filter layers 21C, 22C, and 23C, which are first multiple layers, so that fuel passes in sequence through the first, second, and third filter layers 21C, 22C, and 23C, and the mesh of second multiple layers, which are at least part of the first multiple layers, in this third embodiment the first to third filter layers 21C to 23C, is set so that it becomes finer in going toward the downstream side.

Provided in this filter assembly 20C is an aggregation-promoting part 24C that promotes aggregation of dust in fuel by changing the flow direction or flow velocity of fuel, so that aggregation of dust in fuel is promoted before the upstream side of at least the second finest filter layer among the first to third filter layers 21C, 22C, and 23C, that is, the second filter layer 22C, the aggregation-promoting part 24C being formed in a labyrinth structure in which first and second chambers 41 and 42, for example, which are a plurality of divided chambers, are made to communicate with each other by a first tubular member 45.

The interior of a case 38 formed in a tubular shape with opposite ends closed by end walls 38a and 38b is divided into three sections by two partition walls 39 and 40 fixed to an inner face of the case 38 at intervals in its longitudinal direction; a first chamber 41, a third chamber 43, and a second chamber 42 are formed within the case 38 in order from one end to the other end in the longitudinal direction of the case 38, the first and second chambers 41 and 42 communicate via a first tubular member 45, and the second and third chambers 42 and 43 communicate via a second tubular member 46.

The first filter layer 21C is disposed so as to divide the interior of the first chamber 41 into two sections, the second filter layer 22C is disposed so as to divide the interior of the second chamber 42 into two sections, and the third filter layer 23C is disposed so as to divide the interior of the third chamber 43 into two sections.

The first tubular member 45 has a cross-sectional area that is smaller than the cross-sectional area of the first chamber 41 and extends through the partition walls 39 and 40 and the second and third filter layers 22C and 23C, the upstream end of this first tubular member 45 communicates with the first chamber 41 between the first filter layer 21C and the partition wall 39, and the downstream end of the first tubular member 45 communicates with the second chamber 42 between the second filter layer 22C and the end wall 38b. Furthermore, the second tubular member 46 extends through the partition wall 40 and the third filter layer 23c, the upstream end of this second tubular member 46 communicates with the second chamber 42 between the partition wall 40 and the second filter layer 22C, and the downstream end of the second tubular member 46 communicates with the third chamber 43 between the third filter layer 23C and the partition wall 39.

Furthermore, an inlet tube 44 for guiding fuel within a fuel tank 11 (ref. the first embodiment) into the first chamber 41 between the first filter layer 21C and the end wall 38a is provided in the end wall 38a of the case 38 so that its outlet is disposed at a position offset from the inlet of the first tubular member 45 on a plane perpendicular to the axis of the first tubular member 45, an outlet tube 47 is provided in a side wall of the case 38 so as to extend liquid-tightly through the case 38 with one end thereof projecting into the third chamber 43 between the third filter layer 23C and the partition wall 40, and the outlet tube 47 is connected to a suction part 13 (ref. the first embodiment) of a fuel pump 12.

That is, the aggregation-promoting part 24C is formed from the inlet tube 44, the first chamber 41, the first tubular member 45, and the second chamber 42. The flow velocity of fuel is decreased by fuel flowing from the inlet tube 44 into the first chamber 41, and since the outlet of the inlet tube 44 and the inlet of the first tubular member 45 are offset from each other the flow direction is changed by flow of fuel that has passed through the first filter layer 21C hitting a wall, etc. Furthermore, the flow velocity is increased by fuel flowing from the first chamber 41 into the first tubular member 45, the flow velocity is decreased by fuel flowing from the first tubular member 45 into the second chamber 42, and such changes in the fuel flow direction and flow velocity function as the aggregation-promoting part 24C.

In accordance with this embodiment, the same effects as those of the previous embodiment not being part of the invention can be exhibited.

### EMBODIMENT 2

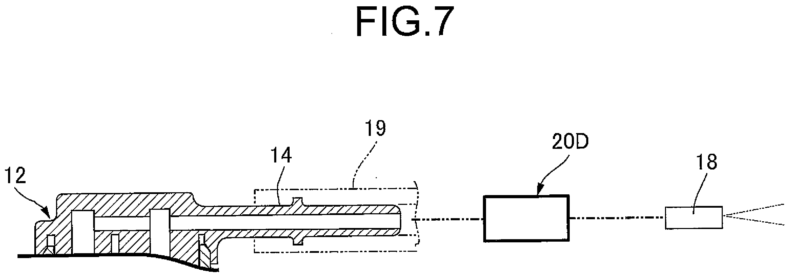

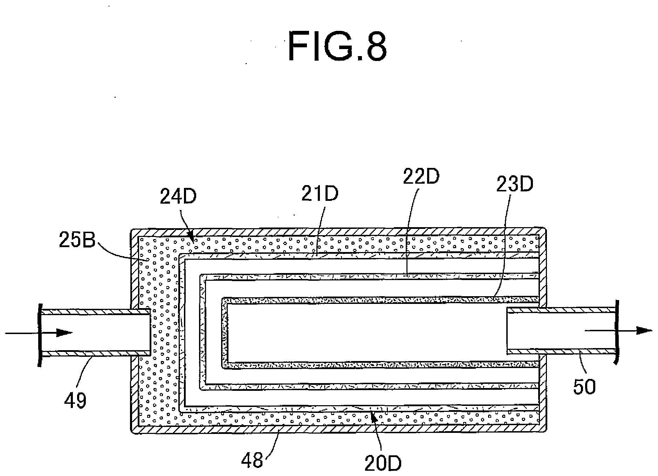

A second embodiment of the present invention is now explained by reference to FIG. 7 and FIG. 8; first, in FIG. 7, a filter assembly 20D is disposed between a discharge part of a fuel pump 12 and a fuel injection valve 18.

In FIG. 8, the filter assembly 20D is formed by disposing first to third filter layers 21D, 22D, and 23D, which are first multiple layers, within a tubular case 48 having opposite ends closed so that the third filter layer 23D is covered by the second filter layer 22D and the second filter layer 22D is covered by the first filter layer 21D, an inlet tube 49 is connected to one end of the case 48, and an outlet tube 50 is connect to the other end of the case 48. Fuel passes in sequence through the interior of the first, second, and third filter layers 21D, 22D, and 23D, and the mesh of second multiple layers, which are at least part of the first multiple layers, in this second embodiment the first to third filter layers 21D to 23D, is set so that it becomes finer in going toward the downstream side.

Provided in this filter assembly 20D is an aggregation-promoting part 24D that promotes aggregation of dust in fuel by changing the flow direction or flow velocity of fuel, so that aggregation of dust in fuel is promoted before the upstream side of at least the second finest filter layer among the first to third filter layers 21D to 23D, that is, the second filter layer 22D, the aggregation-promoting part 24D being formed by a sponge 25B, which is an aggregation-promoting body, being retained by at least one filter layer among the first to third filter layers 21D to 23D, and in this second embodiment the sponge 25B being packed between the first filter layer 2ID and the case 48.

As in this second embodiment, when the aggregation-promoting part 24D is provided on the filter assembly 20D, which is provided on the discharge side of the fuel pump 12, in the same way as for the above-mentioned first embodiment, it is possible to prevent dust from being trapped concentratedly by the finest, downstream-most filter layer among the first to third filter layers 21D to 23D, that is, the third filter layer 23D, thus dispersing trapping of dust throughout the filter layers 21D to 23D and enhancing the durability.

### EMBODIMENT 3

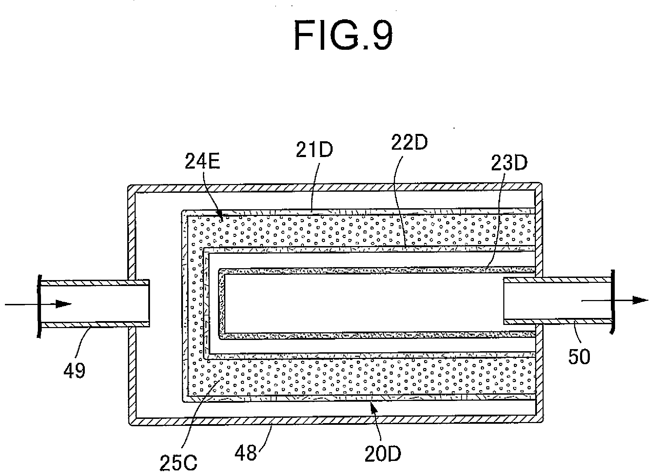

As a third embodiment of the present invention, as shown in FIG. 9, an aggregation-promoting part 24E provided in a filter assembly 20D so that aggregation of dust in fuel is promoted before the upstream side of at least, among first to third filter layers 21D to 23D, the second finest filter layer from the downstream side, that is, the second filter layer 22D, being a sponge 25C, which is an aggregation-promoting body, packed between the first and second filter layers 21D and 22D.

### EMBODIMENT 4

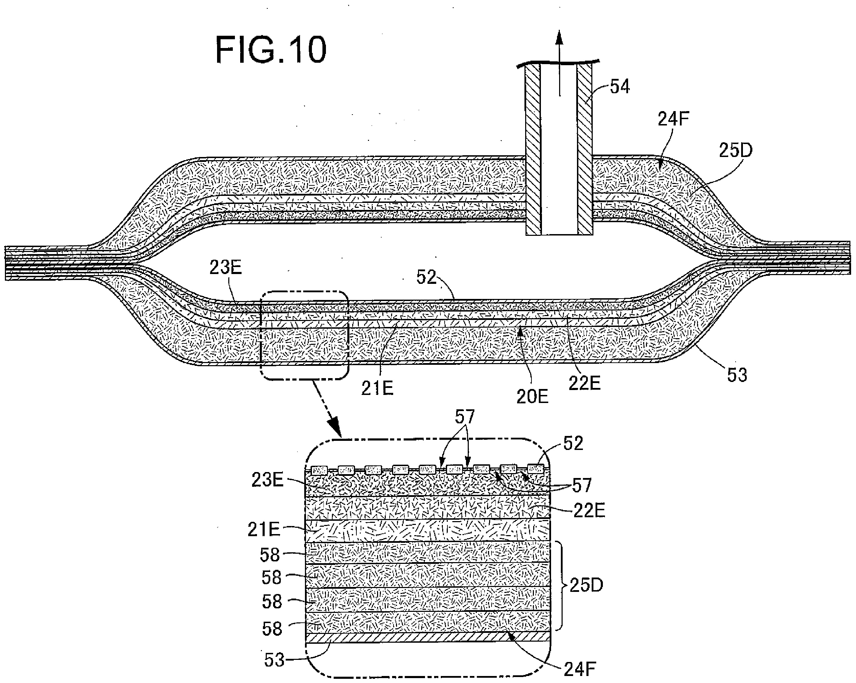

FIG. 10 shows a fourth embodiment of the present invention. Portions corresponding to those of the first to third embodiments are denoted by the same reference numerals and symbols and are only illustrated, a detailed explanation being omitted.

First to fourth filter layers 21E, 22E, 23E, and 52 of a filter assembly 20E are disposed so that the fourth filter layer 52 is covered by the third filter layer 23E, the third filter layer 23E is covered by the second filter layer 22E, and the second filter layer 22E is covered by the first filter layer 21E, the first to third filter layers 21E, 22E, and 23E being formed from a nonwoven fabric. In filter layers of second multiple layers forming at least part of first multiple layers, the finest filter layer is disposed downstream-most. In this fourth embodiment, the first to fourth layers are the first multiple layers, and the second multiple layers are the three layers of the first layer to the third layer. The mesh of the first filter layer 21E is set at 20 to 27 µm, the mesh of the second filter layer 22E is set at 10 to 20 µm, the mesh of the third filter layer 23E is set at 2 to 10 µm, the first to third filter layers 21E to 23E are set so that they become finer in going toward the downstream side, and the finest third filter layer 23E is disposed downstream-most.

The fourth filter layer 52 is layered on the third filter layer 23E, which is the downstream-most layer among the second multiple layers, in order to retain the shape of the first to third filter layers 21E to 23E, which are the second multiple layers; this fourth filter layer 52 is formed from a spunbonded sheet in which recesses 57 and 57 are formed on opposite sides in a large number of spunbonded parts, fuel flows through portions other than the recesses 57, and fuel is filtered by a mesh of for example 40 µm.

Provided in the filter assembly 20E is an aggregation-promoting part 24F that promotes aggregation of dust in fuel by changing the flow direction or flow velocity of fuel, so that aggregation of dust in fuel is promoted before the upstream side of at least the second finest filter layer among the second multiple layers of the filter assembly 20E, which include the first to third filter layers 21E to 23E, that is, the second filter layer 22E; in the fourth embodiment an aggregation-promoting body 25D forming the aggregation-promoting part 24F is in the form of a sponge. Moreover, the border between the mutually layered nonwoven fabrics 58 can be disregarded due to the nonwoven fabrics 58 being fluffy, and the same effect as that of a single nonwoven fabric can be obtained by layering a plurality of thin general purpose nonwoven fabrics 58 to give the same thickness, thus contributing to a reduction in cost.

The aggregation-promoting part 24F is covered by a mesh member 53 for protecting the external shape of the aggregation-promoting part 24F, and a connection tube 54 of the filter assembly 20E extends through the aggregation-promoting part 24F and the mesh member 53 and projects outside.

In accordance with this fourth embodiment, since among the first to fourth filter layers 21E to 23E, and 52 forming the filter assembly 20E, the downstream-most filter layer 52 is the spunbonded sheet, the shape of the downstream-most side of the filter assembly 20E can be retained by the spunbonded sheet, which functions also as the filter layer 52.

### EMBODIMENT 5

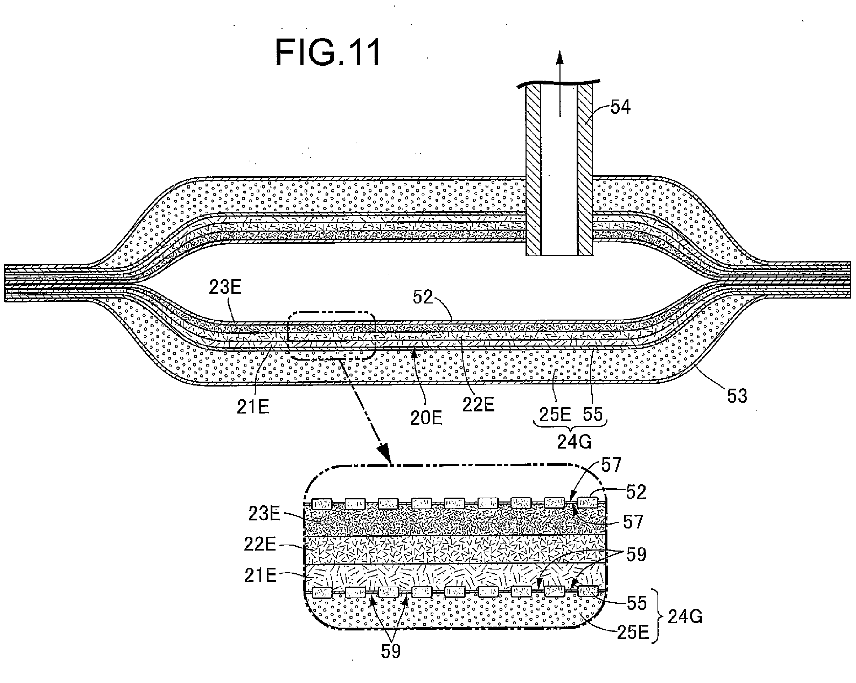

As a fifth embodiment of the present invention, as shown in FIG. 11, part of an aggregation-promoting part 24G provided in a filter assembly 20E may be formed from an aggregation-promoting body 55, which is a spunbonded sheet sandwiching, between itself and a spunbonded sheet that is a fourth filter layer 52 of the filter assembly 20E, first to third filter layers 21E to 23E of the filter assembly 20E; in this fifth embodiment the aggregation-promoting part 24G is formed from the aggregation-promoting body 55, which is a spunbonded sheet with a mesh of 40 µm in which recesses 59 and 59 are formed on opposite sides in a large number of spunbonded parts in the same way as for the fourth filter layer 52 of the filter assembly 20E, and an aggregation-promoting body 25E covering the aggregation-promoting body 55 from the upstream side, and as in the fourth embodiment the aggregation-promoting body 25E is a sponge.

In accordance with this fifth embodiment, since the spunbonded sheet sandwiching the first to third filter layers 21E to 23E of the filter assembly 20E between itself and the fourth filter layer 52, which is a spunbonded sheet on the filter assembly 20E side, is the aggregation-promoting body 55 forming part of the aggregation-promoting part 24G, it is possible to promote aggregation while retaining the shape of the first to third filter layers 21E to 23E, and the spunbonded sheet is used in common for the filter assembly 20E and the aggregation-promoting part 24G, thus reducing the cost. Moreover, since in the aggregation-promoting body 55, which is the spunbonded sheet, dust moves laterally so as to avoid the recesses 59, it is possible to increase the possibility of collision between dust particles, thereby enabling the thickness of the aggregation-promoting part 24G to be reduced. Other embodiment not being part of the invention

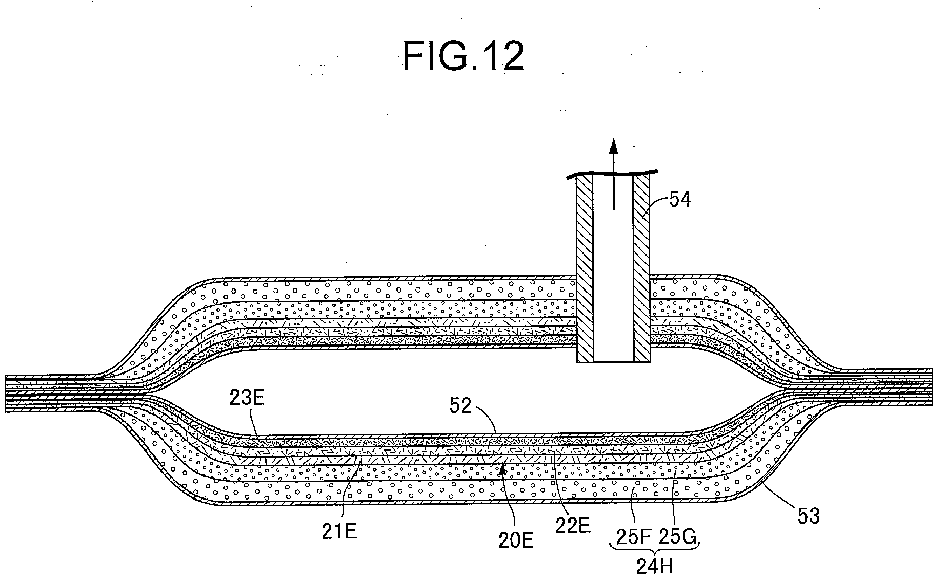

This embodiment, as shown in FIG. 12, an aggregation-promoting part 24H may be formed by layering multiple layers having different coarsenesses, for example, two layers of aggregation-promoting bodies 25F and 25G.

Moreover, the coarseness of the aggregation-promoting body 25G on the downstream side is 80 µm, whereas the coarseness of the aggregation-promoting body 25F on the upstream side is 30 µm, and the aggregation-promoting part 24H is formed by layering the two layers of the aggregation-promoting bodies 25F and 25G having different coarsenesses so that the one on the upstream side is finer.

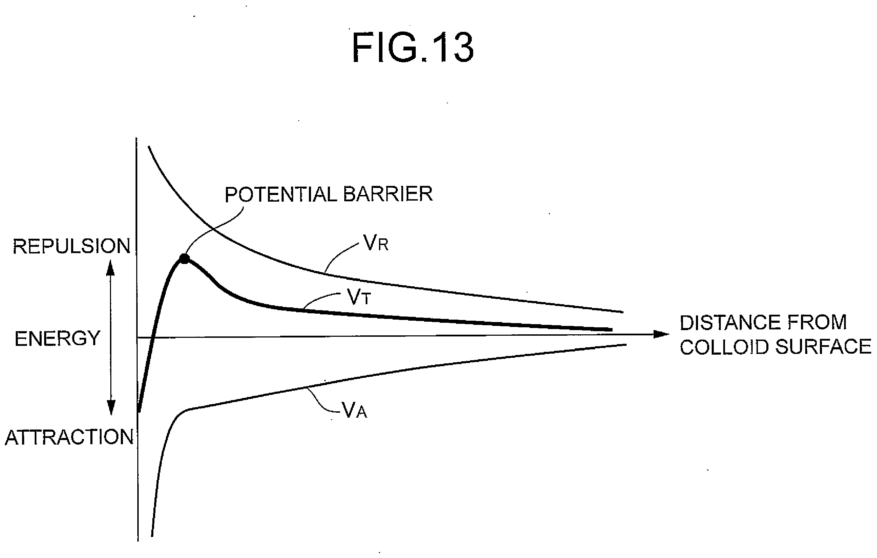

Dispersion and aggregation of colloid particles, which are fine dust of about 10 µm dispersed in gasoline or alcohol fuel, are determined by a total potential of attraction and repulsion; when the total potential is V_{T}, the van der Waals force attraction is V_{A}, and the electrostatic repulsion is V_{R}, then (V_{T} = V_{A} + V_{R}). The total potential V_{T}, the attraction V_{A}, and the repulsion V_{R} change according to the distance from the colloid surface as shown in FIG. 13.

If the total potential V_{T} is on the repulsion side, the colloid is dispersed, and if the total potential V_{T} is on the attraction side, the colloid aggregates; when the distance between colloid particles decreases they are dispersed as a result of the repulsion V_{R}, but when the distance between colloid particles decreases further and passes over a potential barrier, the attraction V_{A} increases and they start to aggregate. In this process, since the colloid surface is charged positive, unless the attraction V_{A} is strong, the potential barrier cannot be passed over, and when colloid increases in size, the attraction V_{A} decreases and aggregation stops.

In accordance with this embodiment, the aggregation-promoting part 24H is formed by layering the two layers of the aggregation-promoting bodies 25F and 25G, but since dust gradually increases in size until reaching the potential barrier, among the two layers of the aggregation-promoting bodies 25F and 25G forming the aggregation-promoting part 24H, even if the coarseness of the aggregation-promoting body 25F on the upstream side is set finer than the coarseness of the aggregation-promoting body 25G on the downstream side, trapping of dust by the aggregation-promoting part 24H can be avoided, it is possible to obtain sufficient aggregation performance by reducing the thickness of the aggregation-promoting part 24H, and it is also possible to prevent large dust from being trapped by increasing the coarseness on the downstream side where aggregation of dust has progressed. As shown in FIG. 12 in particular, when the aggregation-promoting part 24H is formed in a bag shape, even if the mesh is made fine, pressure loss can be suppressed by increasing the area of a fine portion.

However, for 100% gasoline fuel, since dust is sufficiently aggregated, it is necessary to arrange an aggregation-promoting part so that large dust particles can pass through the aggregation-promoting part. Furthermore, for environmentally friendly fuel having a high alcohol concentration, the higher the alcohol concentration, the more suitable it is to carry out the embodiment. Other embodiment not being art of the invention

The coarseness of an aggregation-promoting body 25G on the downstream side in FIG. 12 is for example 40 µm, whereas the coarseness of an aggregation-promoting body 25F on the upstream side is for example 86 µm, and an aggregation-promoting part 24H may be arranged by layering the two layers of the aggregation-promoting bodies 25F and 25G, which have different degrees of coarseness, so that the mesh is finer on the downstream side.

In accordance with this embodiment, when aggregation stops after dust becomes too large to pass over the potential barrier, dust stops further increasing in size, and it is possible even for the aggregation-promoting part 24H, which is formed by layering the two layers of the aggregation-promoting bodies 25F and 25G having different degrees of coarseness so that the mesh is finer on the downstream side, to obtain sufficient aggregation performance, while preventing dust from being trapped, even if the thickness of the aggregation-promoting part 24H is reduced.

Embodiments of the present invention are explained above, but the present invention is not limited to the above-mentioned embodiments and may be modified in a variety of ways as long as the modifications do not depart from the present invention described in Claims.

## Claims

1. A fuel filter device for a fuel formed from gasoline and alcohol, in which a filter assembly (20A, 20D, 20E) comprising filter layers (21A, 22A, 23A; 21D, 22D, 23D; 21E, 22E, 23E, 52) of first multiple layers is disposed in a fuel flow path extending from the interior of a fuel tank (11) to fuel consumption means (18) via a fuel pump (12),
the filter layers of the first multiple layers include filter layers (21A, 22A, 23A; 21D, 22D, 23D; 21E, 22E, 23E) of second multiple layers, and
a finest filter layer (23A, 23D, 23E) is disposed downstream-most in the filter layers (21A, 22A, 23A; 21D, 22D, 23D; 21E, 22E, 23E) of the second multiple layers,
**characterized in that** an aggregation-promoting part (24A, 24D, 24E, 24F, 24G) is provided so as to cover the surface of the filter layers (21A, 22A, 23A; 21D, 22D, 23D, 21E, 22E, 23E, 52) of the first multiple layers of the filter assembly (20A, 20D, 20E) and comprises an aggregation-promoting body (25A, 25B, 25C, 25D, 25E), said agregation-promoting body being a sponge, having a thickness allowing fuel, that flows through the aggregation-promoting body (25A, 25B, 25C, 25D, 25E) to change its flow direction or flow velocity three or more times, the aggregation-promoting body having a coarseness permitting passage of dust in fuel through the aggregation-promoting part and promoting aggregation of dust in fuel at the filter layers of the first multiple layers positioned downstream of the aggregation-promoting part so that aggregation of dust in fuel, that is passing the aggregation-promoting part, is promoted before the upstream side of at least the second finest filter layer (22A, 22D, 22E) among the filter layers (21A, 22A, 23A; 21D, 22D, 23D; 21E, 22E, 23E) of the second multiple layers.

2. The fuel filter device according to Claim 1, wherein the coarseness of the aggregation-promoting body (25A, 25B, 25C) of the aggregation-promoting part is set at 2 to 50 times the coarseness of the coarsest filter layer (21A, 21D) among the filter layers (21A, 22A, 23A; 21D, 22D, 23D) of the second multiple layers.

3. The fuel filter device according to Claim 1 or 2, wherein the sponge member is retained by at least one filter layer (21A, 21D) among the first multiple layers of the filter layers (21A, 22A, 23A; 21D, 22D, 23D) of the fist multiple layers.

4. The fuel filter device according to Claim 1, wherein the filter assembly (20E) is formed from the layered filter layers (21E, 22E, 23E) of the second multiple layers, and a spunbonded sheet that is a filter layer (52) layered on the downstream-most layer of the second multiple layers in order to retain the shape of the filter layers (21E, 22E, 23E) of the second multiple layers.

5. The fuel filter device according to Claim 4, wherein the aggregation-promoting part (24G) further comprises another spunbonded sheet (55), and wherein the filter layer (21E, 22E, 23E) of the second multiple layers is sandwiched between the other spunbonded sheet (55) and the spunbonded sheet (52).

6. The fuel filter device according to any one of Claims 1 to 5, wherein the filter assembly (20A) is supported on a suction part (13) of the fuel pump (12), part of the fuel pump (12) being housed within the fuel tank (11).

7. The fuel filter device according to Claim 1, wherein the filter assembly (20D) is of a tubular case and configured to be disposed in the fuel flow path at a location downstream of a discharge part of the fuel pump (12).

## Patentansprüche

1. Kraftstofffiltervorrichtung für einen Kraftstoff, der aus Benzin und Alkohol gebildet ist, in dem eine Filterbaugruppe (20A, 20D, 20E), die Filterschichten (21A, 22A, 23A; 21D; 22D, 23D; 21E, 22E, 23E, 52) von ersten mehreren Schichten aufweist, in einem Kraftstofffließpfad angeordnet ist, der vom Inneren eines Kraftstofftanks (11) zu einem Kraftstoffverbrauchsmittel (18) über eine Kraftstoffpumpe (12) verläuft,
wobei die Filterschichten der ersten mehreren Schichten Filterschichten (21A, 22A, 23A; 21D, 22D, 23D; 21E, 22E, 23E) von zweiten mehreren Schichten enthalten, und
wobei eine feinste Filterschicht (23A, 23D, 23E) am am meisten stromabwärtigen Ende in den Filterschichten (21A, 22A, 23A; 21D, 22D, 23D; 21E, 22E, 23E) der zweiten mehreren Schichten angeordnet ist,
**dadurch gekennzeichnet, dass**
eine aggregationsfördernde Komponente (24A, 24D, 24E, 24F, 24G) vorgesehen ist, um die Oberfläche der Filterschichten (21A, 22A, 23A; 21D, 22D, 23D, 21E, 22E, 23E, 52) der ersten mehreren Schichten der Filterbaugruppe (20A, 20D, 20E) abzudecken und einen aggregationsfördernden Körper (25A, 25B, 25C, 25D, 25E) aufweist, wobei der aggregationsfördernde Körper ein Schwamm ist, der eine Stärke hat, die es dem Kraftstoff ermöglicht, der durch den aggregationsfördernden Körper (25A, 25B, 25C, 25D, 25E) fließt, die Fließrichtung oder die Fließgeschwindigkeit um das Drei- oder Mehrfache davon zu ändern, wobei der aggregationsfördernde Körper eine Passage von Rauheit zum Durchlassen von Staub im Kraftstoff über die aggregationsfördernde Komponente hat, und die Aggregation von Staub im Kraftstoff an den Filterschichten der ersten mehreren Schichten fördert, die stromabwärts zur aggregationsfördernden Komponente angeordnet sind, sodass die Aggregation von Staub im Kraftstoff, der durch die aggregationsfördernde Komponente durchfließt, vor der stromaufwärtigen Seite von wenigstens der zweiten feinsten Filterschicht (22A, 22D, 22E) aus den Filterschichten (21A, 22A, 23A; 21D, 22D, 23D; 21E, 22E, 23E) der zweiten mehreren Schichten gefördert wird.

2. Kraftstofffiltervorrichtung nach Anspruch 1, wobei die Rauheit des aggregationsfördernden Körpers (25A, 25B, 25C) der aggregationsfördernden Komponente auf das zwei- bis 50-Fache der Rauheit der rauesten Filterschicht (21A, 21D) aus den Filterschichten (21A, 22A, 23A; 21D, 22D, 23D) der zweiten mehreren Schichten festgelegt ist.

3. Kraftstofffiltervorrichtung nach Anspruch 1 oder 2, wobei das Schwammelement durch die wenigstens eine Filterschicht (21A, 21D) aus den ersten mehreren Schichten der Filterschichten (21A, 22A, 23A; 21D, 22D, 23D) der ersten mehreren Schichten gehalten wird.

4. Kraftstofffiltervorrichtung nach Anspruch 1, wobei die Filterbaugruppe (20E) aus den geschichteten Filterschichten (21E, 22E, 23E) der zweiten mehreren Schichten und einem Spinnvliesblatt gebildet ist, das heißt, eine Filterschicht (52), die an der am meisten stromabwärtigen Schicht der zweiten mehreren Schichten geschichtet ist, um die Form der Filterschichten (21E, 22E, 23E) der zweiten mehreren Schichten beizubehalten.

5. Kraftstofffiltervorrichtung nach Anspruch 4,
wobei die aggregationsfördernde Komponente (24G) weiterhin ein anderes Spinnvliesblatt (55) aufweist, und wobei die Filterschicht (21E, 22E, 23E) der zweiten mehreren Schichten zwischen dem anderen Spinnvliesblatt (55) und dem Spinnvliesblatt (52) angeordnet ist.

6. Kraftstofffiltervorrichtung nach einem der Ansprüche 1 bis 5, wobei die Filterbaugruppe (20A) an einer Ansaugkomponente (13) der Kraftstoffpumpe (12) gehalten wird, wobei ein Teil der Kraftstoffpumpe (12) im Kraftstofftank (11) aufgenommen ist.

7. Kraftstofffiltervorrichtung nach Anspruch 1, wobei die Filterbaugruppe (20D) ein röhrenförmiges Gehäuse ist und dazu ausgestaltet ist, im Benzinfließpfad an einer Position nachgelagert zur Ausgabekomponente der Kraftstoffpumpe (12) angeordnet zu sein.

## Revendications

1. Dispositif de filtration de carburant pour un carburant formé à partir d'essence et d'alcool, dans lequel un ensemble de filtration (20A, 20D, 20E) comprenant des couches de filtration (21A, 22A, 23A ; 21D, 22D, 23D ; 21E, 22E, 23E, 52) de multiples premières couches est disposé sur un trajet d'écoulement de carburant s'étendant de l'intérieur d'un réservoir de carburant (11) jusqu'à un moyen de consommation de carburant (18) par l'intermédiaire d'une pompe à carburant (12),
les couches de filtration des multiples premières couches incluent des couches de filtration (21A, 22A, 23A ; 21D, 22D, 23D ; 21E, 22E, 23E) de multiples secondes couches, et
une couche de filtration la plus fine (23A, 23D, 23E) est disposée le plus en aval dans les couches de filtration (21A, 22A, 23A ; 21D, 22D, 23D ; 21E, 22E, 23E) des multiples secondes couches,
**caractérisé en ce qu'**une partie favorisant une agrégation (24A, 24D, 24E, 24F, 24G) est fournie de façon à recouvrir la surface des couches de filtration (21A, 22A, 23A ; 21D, 22D, 23D ; 21E, 22E, 23E, 52) des multiples premières couches de l'ensemble de filtration (20A, 20D, 20E) et comprend un corps favorisant l'agrégation (25A, 25B, 25C, 25D, 25E), ledit corps favorisant l'agrégation étant une éponge, ayant une épaisseur permettant au carburant, qui s'écoule à travers le corps favorisant l'agrégation (25A, 25B, 25C, 25D, 25E), de changer sa direction d'écoulement ou sa vitesse d'écoulement trois fois ou plus, le corps favorisant l'agrégation ayant une granulosité permettant le passage de la poussière dans un carburant à travers la partie favorisant l'agrégation et favorisant l'agrégation de la poussière dans un carburant au niveau des couches de filtration des multiples premières couches positionnées en aval de la partie favorisant l'agrégation de sorte qu'une agrégation de la poussière dans le carburant, qui traverse la partie favorisant l'agrégation, est favorisée avant le côté amont au moins de la seconde couche de filtration la plus fine (22A, 22D, 22E) parmi les couches de filtration (21A, 22A, 23A ; 21D, 22D, 23D ; 21E, 22E, 23E) des multiples secondes couches.

2. Dispositif de filtration de carburant selon la revendication 1, dans lequel la granulosité du corps favorisant l'agrégation (25A, 25B, 25C) de la partie favorisant l'agrégation est fixée à 2 à 50 fois la granulosité de la couche de filtration la plus granuleuse (21A, 21D) parmi les couches de filtration (21A, 22A, 23A ; 21D, 22D, 23D) des multiples secondes couches.

3. Dispositif de filtration de carburant selon la revendication 1 ou 2, dans lequel l'élément d'éponge est retenu par au moins une couche de filtration (21A, 21D) parmi les multiples premières couches des couches de filtration (21A, 22A, 23A ; 21D, 22D, 23D) des multiples premières couches.

4. Dispositif de filtration de carburant selon la revendication 1, dans lequel l'ensemble de filtration (20E) est formé à partir des couches de filtration en couches (21E, 22E, 23E) des multiples secondes couches, et d'une feuille non tissée qui est une couche de filtration (52) en couches sur la couche la plus en aval des multiples secondes couches afin de conserver la forme des couches de filtration (21E, 22E, 23E) des multiples secondes couches.

5. Dispositif de filtration de carburant selon la revendication 4, dans lequel la partie favorisant l'agrégation (24G) comprend en outre une autre feuille non tissée (55), et dans lequel la couche de filtration (21E, 22E, 23E) des multiples secondes couches est insérée entre l'autre feuille non tissée (55) et la feuille non tissée (52).

6. Dispositif de filtration de carburant selon l'une quelconque des revendications 1 à 5, dans lequel l'ensemble de filtration (20A) est supporté sur une partie d'aspiration (13) de la pompe à carburant (12), une partie de la pompe à carburant (12) étant logée dans le réservoir de carburant (11).

7. Dispositif de filtration de carburant selon la revendication 1, dans lequel l'ensemble de filtration (20D) est un boîtier tubulaire et est configuré pour être disposé sur le trajet d'écoulement de carburant dans une position en aval d'une partie de décharge de la pompe à carburant (12).
